# DEMANDE DE BREVET EUROPEEN

(11) **EP 0 718 328 A1**
(43) Date de publication de la demande: **26.06.1996**
(21) Numéro de dépôt: 95203437.9
(22) Date de dépôt: 11.12.1995
(51) Int. Cl.: C08F 255/02, C08F 255/00, C08F 8/00, C08L 23/10

(54) **Polymère du propylène, procédé pour son obtention et utilisation**

(30) Priorité: 19.12.1994 BE 9401138
(71) Demandeur: SOLVAY (Société Anonyme), B-1050 Bruxelles (BE)
(72) Inventeur: Gauthy, Fernand, B-1780 Wemmel (BE); Vandevijver, Eric, B-1200 Bruxelles (BE); Kaszacs, Martine, B-1420 Braine l'Alleud (BE)
(74) Mandataire: Marckx, Frieda

(57) **Abrégé**

Polymère du propylène contenant des unités monomériques dérivées d'au moins un composé fonctionnel (A) comprenant au moins deux insaturations vinyliques et un ou plusieurs noyaux aromatiques présentant un durcissement structural sous contrainte.

## Description

La présente invention concerne un polymère du propylène présentant des propriétés rhéologiques particulières. Elle concerne également un procédé d'obtention de ce polymère ainsi que son utilisation pour le façonnage d'objets par les procédés d'extrusion, de calandrage, d'injection et de thermoformage ainsi que pour la fabrication de mousses.

Les polymères du propylène sont connus pour leurs propriétés mécaniques, chimiques et électriques ainsi que pour leur résistance à la chaleur. Leur coût relativement peu élevé en fait un matériau de choix pour un grand nombre d'applications telles que la formation d'objets façonnés. Néanmoins leurs propriétés rhéologiques et en particulier leur tenue en fondu sont telles qu'ils peuvent difficilement être mis en oeuvre par certaines méthodes telles que l'extrusion, l'extrusion-soufflage, le calandrage, le couchage, l'enduction et le thermoformage. Ces polymères sont en outre peu adaptés à la formation de mousses.

Différentes approches ont été utilisées pour résoudre ce problème.

C'est ainsi que les demandes de brevet EP-A-384431 et EP-A-190889 décrivent des polymères du propylène présentant, à l'état fondu, une augmentation de la résistance à la déformation lors de l'allongement ou de l'extension, appelée ci-après plus simplement durcissement structural sous contrainte, obtenus par traitement de poudres de polymère par des peroxydes en l'absence substantielle d'oxygène ou par irradiation contrôlée desdites poudres. Les polymères ainsi obtenus sont aptes à être mis en oeuvre par extrusion, calandrage, injection ou thermoformage et conviennent pour la formation de mousses. Toutefois leurs procédés d'obtention sont longs, coûteux et délicats à mettre en oeuvre surtout si l'on souhaite obtenir des résultats homogènes et reproductibles. Ces polymères sont donc difficilement accessibles.

On a également tenté d'améliorer les propriétés en fondu des polymères du propylène en les mélangeant avec des monomères fonctionnels tels que le divinylbenzène en présence d'un générateur de radicaux libres et en soumettant le mélange ainsi obtenu à un traitement thermique (brevet CA-A-680211).

Dans les demandes de brevet JP-A-59/093711 et EP-A-0274906, on ajoute en outre à ce mélange, avant le traitement thermique, des agents stabilisants et/ou des additifs anti-oxydants. Ces différents procédés conduisent à des polymères ne présentant pas simultanément une bonne tenue en fondu et une stabilité thermique satisfaisante.

On a maintenant trouvé des polymères du propylène qui présentent des propriétés rhéologiques à l'état fondu améliorées et en particulier une augmentation de la résistance à la déformation lors de l'allongement ou de l'extension et qui ne présentent pas les inconvénients des compositions appartenant à l'art antérieur.

En conséquence, la présente invention concerne un homo- ou un co-polymère du propylène contenant des unités monomériques dérivées d'au moins un composé fonctionnel (A) comprenant au moins deux insaturations vinyliques et un ou plusieurs noyaux aromatiques qui présente un durcissement structural sous contrainte.

Dans le cadre de la présente invention, on entend par durcissement structural sous contrainte d'un polymère la propriété dudit polymère de présenter, à l'état fondu, une augmentation de sa viscosité élongationnelle lors de l'allongement ou de l'extension jusqu'à rupture de la masse fondue. Cette propriété est aisément déterminée au moyen de rhéomètres qui fournissent l'évolution de la viscosité élongationnelle à l'état fondu en fonction du temps pour une température et un gradient d'élongation données.

Les homo- ou co-polymères du propylène selon l'invention, appelés ci-après plus simplement polymères du propylène, sont choisis parmi les homopolymères du propylène et les copolymères de ce dernier contenant au moins 50 % en poids de propylène et au moins un autre monomère. A titre d'exemples préférés de ces autres monomères, on peut citer les α-oléfines contenant de 2 à 20 atomes de carbone telles que par exemples l'éthylène, le 1-butène, le 1-pentène, le 1-hexène, les méthyl-1-butènes, les méthyl-1-pentènes, le 1-octène et le 1-décène.

Par copolymères du propylène on entend aussi bien les copolymères statistiques que les copolymères à blocs. Ces polymères sont bien connus de l'homme du métier.

Les premiers sont généralement constitués de chaînes macromoléculaires dans lesquelles sont répartis statistiquement les monomères. La teneur en propylène de ces copolymères statistiques est le plus souvent supérieure ou égale à 70 % en poids, de préférence supérieure ou égale 75 % en poids. Les seconds sont constitués de blocs distincts de composition variable obtenus au cours d'étapes de polymérisation successives; chaque bloc consistant généralement en un homopolymère du propylène ou d'une autre α-oléfine ou en un copolymère statistique comprenant du propylène et au moins un autre monomère choisi parmi les monomères cités ci-avant. Sont également considérés comme copolymères à blocs des copolymères constitués d'un bloc choisi parmi les homopolymères du propylène et les copolymères statistiques de ce dernier et d'un autre bloc choisi parmi les co-polymères d'α-oléfines différentes du propylène. Les copolymères à blocs préférés selon l'invention contiennent un bloc homopolymère du propylène et un bloc copolymère statistique propylène/éthylène et/ou butène.

Les homopolymères du propylène et les copolymères de ce dernier avec l'éthylène et/ou le 1-butène donnent de bons résultats.

Il va de soi que le polymère du propylène selon la présente invention peut être constitué d'un seul polymère du propylène tel que défini ci-avant ou d'un mélange desdits polymères.

Selon une variante avantageuse, le polymère du propylène de l'invention contient deux polymères du propylène tels que décrits ci-avant (polymères (P) et (Q)) dont l'indice de fluidité en fondu (MFI) est différent.

Dans le cadre de la présente invention, le MFI est mesuré à 230 °C sous une charge de 2,16 kg selon la norme ASTM D 1238 (1986). Le polymère (P) est le plus souvent choisi parmi les homo- et co-polymères du propylène dont le MFI est de 0,1 à 20 g/10 min. De préférence, le MFI du polymère (P) est d'au moins 0,5 g/10 min et plus particulièrement d'au moins 1 g/10 min. On obtient de bons résultats lorsque le polymère (P) a un MFI d'au plus 10 g/10 min et plus particulièrement d'au plus 5 g/10 min. Le polymère (Q) est le plus souvent choisi parmi les homopolymères du propylène. Généralement le polymère (Q) a un MFI supérieur à 20 g/10 min, et plus particulièrement supérieur ou égal à 25 g/10 min. Des polymères (Q) dont le MFI est supérieur ou égal à 30 g/10 min donnent de bons résultats. Le MFI du polymère (Q) est en outre généralement d'au plus 1000 g/10 min et plus particulièrement d'au plus 500 g/10 min.

Des polymères du propylène selon la présente invention constitués d'un polymère (P) dont le MFI est de 0,5 à 5 g/10 min et d'un polymère (Q) qui est un homopolymère du propylène dont le MFI est de 40 à 100 g/10 min conviennent particulièrement bien.

Les quantités respectives des polymères (P) et (Q) sont généralement telles que leur rapport en poids est de 0,05 à 50. De préférence le rapport en poids des polymères (P) et (Q) est d'au moins 1. On obtient de bons résultats lorsque ce rapport est de 1 à 10.

Le polymère du propylène selon la présente invention ne contient de préférence pas de polymère autre que le ou les polymères du propylène.

Les polymères du propylène selon la présente invention contiennent en outre des unités monomériques dérivées d'au moins un composé fonctionnel (A) comprenant au moins deux insaturations vinyliques et un ou plusieurs noyaux aromatiques. Les polymères préférés selon la présente invention sont tels que le composé fonctionnel (A) est le divinylbenzène.

La teneur en unités monomériques dérivées du composé fonctionnel (A) présentes dans les polymères du propylène selon l'invention est d'au moins 0,01 g par kg de polymère. Cette quantité est en outre avantageusement supérieure ou égale à 0,1 et plus particulièrement supérieure ou égale à 0,5 g par kg de polymère.

La quantité maximale d'unités monomériques dérivées du composé (A) n'est pas critique. Pour des raisons économiques, on préfère toutefois qu'elle soit inférieure ou égale à 50 g et le plus souvent inférieure ou égale à 25 g par kg de polymère. On obtient de bons résultats lorsque cette quantité est inférieure ou égale à 10 g par kg de polymère. Des polymères du propylène contenant de 0,1 à 10 g d'unités monomériques dérivées de composé fonctionnel (A) par kg de polymère conviennent bien.

Les polymères du propylène selon l'invention contiennent en outre au moins un additif anti-oxydant. Cet additif est souvent présent en quantité d'au moins 0,1 g par kg de polymère du propylène, de préférence d'au moins 0,5 g et plus particulièrement d'au moins 1 g par kg de polymère du propylène. La quantité d'additif anti-oxydant est en outre le plus souvent inférieure ou égale à 100 g et plus particulièrement inférieure ou égale à 50 g par kg de polymère. Des quantités inférieures ou égales à 10 g par kg de polymère du propylène conviennent particulièrement bien.

On obtient de bons résultats lorsque la quantité d'additif anti-oxydant est de 0,5 à 10 g par kg de polymère du propylène.

Cet additif anti-oxydant peut être tout additif anti-oxydant ou tout mélange d'additifs anti-oxydants connu pour polyoléfines. Il peut par exemple être choisi parmi les composés comprenant un groupement phénol stériquement encombré, parmi les composés phosphorés et parmi les composés comprenant un groupement thio-éther. De bons résultats sont obtenus avec les composés comprenant un groupement phénol stériquement encombré et les composés phosphorés. A titre d'exemples de composés comprenant un groupement phénol stériquement encombré, on peut utiliser le pentaérythrityl tétrakis(3,5-di-t-butyl-4-hydroxyphénylpropionate), le stéaryl β-(3,5-di-t-butyl-4-hydroxyphényl)-propionate, le N,N'-bis(3-(3',5'-di-t-butyl-4'-hydroxyphényl)-propionyl)hexaméthylènediamine, le bis(β(3,5-di-t-butyl-4-hydroxyphényl-éthyl) subérate, le diéthyl 3,5-di-t-butyl-4-hydroxybenzylphosphonate et le calcium bis(éthyl(3,5-di-t-butyl-4-hydroxy-benzyl) phosphonate). A titre de composés phosphorés, on peut mettre en oeuvre par exemple le tris(2,4-di-t-butylphényl) phosphite, le tris(paranonylphényl) phosphite, le tris(2,4-dinonylphényl) phosphite et le tétrakis(2,4-di-t-butylphényl)4,4'-biphénylylènediphosphonite. A titre de composés comprenant un groupement thio-éther, on peut citer par exemple le distéaryl thiodipropionate et le dilauryl thiodipropionate.

Lorsqu'on vise une application alimentaire, on utilise de préférence des composés comprenant un groupement phénol stériquement encombré et des composés phosphorés, les composés comprenant un groupement thio-éther convenant moins pour ces applications. Le pentaérythrityl tétrakis(3,5-di-t-butyl-4-hydroxyphényl propionate), le tris(2,4-di-t-butylphényl) phosphite et leurs mélanges conviennent particulièrement bien.

Les polymères du propylène selon la présente invention peuvent également contenir d'autres additifs conventionnels tels que des agents anti-oxydants supplémentaires, des agents anti-acides, des agents anti-UV, des agents anti-statiques, des colorants ou des matériaux de charge. Ils peuvent également contenir des unités monomériques dérivées de composés fonctionnels différents des composés (A). A titre d'exemples non limitatifs de ces composés fonctionnels différents des composés (A), on peut citer l'anhydride maleique, le styrène et l'éthylvinylbenzène.

Les polymères du propylène selon la présente invention présentent simultanément de bonnes propriétés rhéologiques et une stabilité thermique excellente. Cette stabilité thermique peut par exemple être caractérisée par la période d'induction de l'oxydation telle que définie ci-après en rapport avec les exemples illustrant la présente invention. La période d'induction des polymères du propylène selon la présente invention est généralement d'au moins 10 minutes, de préférence d'au moins 20 minutes et plus particulièrement d'au moins 50 minutes.

Les polymères du propylène présentent en outre généralement les propriétés avantageuses reprises ci-après.

Leur viscosité à bas gradient de cisaillement est généralement plus élevée que celle des polymères correspondants qui ne contiennent pas d'unités monomériques dérivées de composé fonctionnel (A). Ils présentent en outre le plus souvent une température et une vitesse de cristallisation particulièrement élevées ce qui conduit à une amélioration de leur transparence et de leur rigidité. Ils peuvent également être mis en oeuvre à des cadences plus élevées que celles utilisées pour les polymères du propylène traditionnels.

On remarque également que, lorsque le polymère du propylène est un copolymère à blocs, la dispersion des deux blocs est remarquablement fine et homogène, ce qui conduit à une amélioration des propriétés mécaniques. Cette propriété est particulièrement avantageuse pour les copolymères à blocs contenant un bloc cristallin du propylène et un bloc élastomérique propylène/éthylène pour lesquels une meilleure dispersion de la phase élastomérique dans la phase cristalline conduit à une amélioration du compromis rigidité-résistance aux chocs.

On remarque également que les polymères du propylène selon la présente invention contiennent peu, et le plus souvent avantageusement pas, d'agglomérats infusibles lors de leur mise en oeuvre.

Par ailleurs les polymères du propylène selon la présente invention contiennent avantageusement peu, et de préférence pas, de fractions insolubles dans le xylène chaud. De ce fait les objets façonnés au départ de ces polymères ne présentent que très peu, et avantageusement pas, d'imperfections. Le plus souvent cette fraction de polymère insoluble dans le xylène chaud est inférieure à 20 % en poids, de préférence inférieure à 10 % en poids et plus particulièrement inférieure à 1 % en poids.

Les polymères du propylène selon la présente invention présentent des propriétés rhéologiques en fondu qui les rendent particulièrement bien adaptés à l'obtention d'objets façonnés par extrusion et en particulier par extrusion- ou injection-soufflage, thermoformage ou enduction. Ils conviennent également bien pour la fabrication de mousses. Ces utilisations constituent dès lors des aspects supplémentaires de la présente invention. Les polymères du propylène qui présentent un indice de fluidité en fondu élevé conviennent avantageusement pour l'injection à cadence élevée.

Les polymères du propylène selon l'invention qui sont constitués des polymères (P) et (Q) présentent en outre l'avantage d'avoir une rigidité particulièrement élevée.

La présente invention concerne également un procédé particulier de préparation des polymères du propylène selon la présente invention.

A cet effet la présente invention concerne un procédé continu de préparation de polymère du propylène par mélange en fondu d'au moins un polymère du propylène, d'au moins un composé fonctionnel (A) tel que défini ci-avant et d'au moins un générateur de radicaux libres, dans une extrudeuse comprenant à sa sortie une zone de compression précédant une zone d'évacuation, dans lequel on introduit au moins un additif anti-oxydant dans la masse fondue au plus tard avant l'entrée de celle-ci dans ladite zone de compression.

Par extrudeuse, on entend désigner tout dispositif continu comprenant une zone d'alimentation et à sa sortie une zone d'évacuation précédée d'une zone de compression, cette dernière forçant la masse fondue à passer au travers de la zone d'évacuation.

L'extrudeuse peut comprendre notamment les parties suivantes :
(1) une trémie d'alimentation principale à l'entrée de l'extrudeuse,
(2) éventuellement un ou plusieurs dispositifs d'alimentation différée qui permettent d'introduire simultanément ou séparément le polymère du propylène, le composé fonctionnel (A) et le générateur de radicaux libres (appelé ci-après plus simplement générateur),
(3) un ou plusieurs éléments de vis permettant la propagation de la matière à extruder,
(4) éventuellement un ou plusieurs éléments malaxeurs permettant le mélange de la matière à extruder, les éléments de vis et les éléments malaxeurs pouvant éventuellement s'alterner,
(5) une ou plusieurs zones d'échauffement permettant la fusion du polymère du propylène et la réaction en fondu des différents réactifs,
(6) à la sortie, une zone de compression suivie d'une zone d'évacuation, la zone de compression ayant pour fonction de compresser la matière à extruder afin de la forcer au travers de la zone d'évacuation de l'extrudeuse,
(7) un dispositif d'alimentation différée disposé à un endroit situé après l'introduction du composé fonctionnel (A) et du générateur, où la masse comprenant la polyoléfine, le composé (A) et le générateur est déjà fondue, et avant que la matière à extruder n'entre dans la zone de compression (6) précitée.

Les parties (1) à (6) ne sont pas nécessairement disposées dans cet ordre.

La zone d'évacuation de l'extrudeuse peut être suivie d'un dispositif de granulation ou d'un dispositif donnant à la matière extrudée une forme profilée telle qu'un film.

L'extrudeuse utilisable dans le procédé selon l'invention peut également contenir, de préférence après la zone (5), une zone de dégazage afin d'éliminer les quantités excessives de composé (A), de générateur n'ayant pas réagi et éventuellement les sous-produits générés lors de l'extrusion. Les extrudeuses pouvant convenir dans le procédé selon l'invention sont notamment les extrudeuses du type monovis, les extrudeuses du type co-malaxeur telles que par exemples les extrudeuses commercialisées par la société BUSS, les extrudeuses du type bi-vis co-rotatives interpénétrées ou non interpénétrées, les extrudeuses du type bi-vis contra-rotatives interpénétrées ou non interpénétrées et les extrudeuses du type multi-vis. On utilise de préférence une extrudeuse du type co-malaxeur ou du type bi-vis co-rotatives interpénétrées.

Dans le procédé selon l'invention, on introduit dans l'extrudeuse le (ou les) polymère(s) du propylène, le (ou les) composé(s) fonctionnel(s) (A) et le (ou les) générateur(s). Ces trois réactifs peuvent être introduits simultanément, éventuellement en les mélangeant au préalable, de préférence à sec et à température ambiante, par exemple dans un mélangeur mécanique. Ces trois réactifs peuvent également être introduits séparément dans un ordre quelconque, par exemple en introduisant d'abord le polymère du propylène et ensuite simultanément le composé (A) et le générateur, le composé (A) et le générateur étant éventuellement mélangés au préalable. On peut aussi introduire d'abord le polymère du propylène et le composé (A), éventuellement après les avoir mélangés au préalable, et ensuite y ajouter le générateur. On peut également introduire les trois réactifs en trois étapes successives, par exemple d'abord le polymère du propylène, puis le composé fonctionnel (A) et ensuite le générateur. Il peut s'avérer avantageux d'introduire le composé fonctionnel (A) et le générateur (séparément ou simultanément) après la fusion du polymère du propylène afin d'optimiser l'homogénéisation du mélange.

Dans le procédé selon l'invention, il est essentiel que l'introduction de l'additif anti-oxydant intervienne en différé, à savoir dans une étape d'alimentation différée et distincte, au moment où le composé fonctionnel (A) et le générateur sont déjà introduits et présents au sein de la masse fondue comprenant le polymère du propylène, le composé (A) et le générateur, et avant que la masse ne soit entrée dans la zone de compression précédant la zone d'évacuation de l'extrudeuse. Si l'introduction de l'additif anti-oxydant intervient en même temps ou avant l'introduction d'un des autres réactifs, ou encore avant la fusion de la masse, ou encore en même temps ou après l'entrée de la masse dans la zone de compression précitée, on n'obtient pas un polymère du propylène présentant à la fois d'excellentes propriétés rhéologiques et une stabilité thermique élevée. Par "introduction différée de l'additif anti-oxydant" on entend désigner l'introduction du ou des additifs anti-oxydants en une seule fois ou sous forme d'introduction étagée, dans la masse fondue au plus tard avant l'entrée de celle-ci dans la zone de compression de l'extrudeuse.

Afin d'éviter tous les problèmes imputables à la présence de solvant ou de diluant dans le polymère final, on préfère généralement introduire l'additif anti-oxydant sous forme d'une poudre.

Dans une première variante du procédé selon l'invention, le polymère du propylène mis en oeuvre contient les deux polymères (P) et (Q) décrits ci-avant. Dans ce cas, les polymères (P) et (Q) sont introduits dans l'extrudeuse au plus tard en même temps que le composé fonctionnel (A). De préférence ces deux polymères sont introduits dans l'extrudeuse sous forme d'un mélange via la trémie principale d'alimentation. Cette première variante présente l'avantage de pouvoir ajuster le MFI du polymère du propylène selon l'invention à l'application à laquelle il est destiné.

Selon une deuxième variante du procédé selon l'invention, on introduit une première partie du polymère du propylène dans la trémie d'alimentation principale à l'entrée de l'extrudeuse et une seconde partie dudit polymère du propylène, en différé, simultanément avec l'additif anti-oxydant. Celui-ci est alors avantageusement mélangé au préalable avec la seconde partie du polymère du propylène. On peut également introduire l'additif anti-oxydant avec un polymère du propylène différent de celui introduit via la trémie d'alimentation principale.

Dans une troisième variante du procédé selon l'invention, on additionne une petite quantité d'agent stabilisant, appelé ci-après "agent préstabilisant", au polymère du propylène avant ou au moment de l'introduction de celui-ci dans l'extrudeuse et donc avant l'introduction de l'additif anti-oxydant.

Cette troisième variante s'avère particulièrement performante lorsque le polymère du propylène mis en oeuvre est un polymère vierge sortant du réacteur de polymérisation sans avoir subi de traitement ultérieur. L'agent préstabilisant a alors pour fonction de protéger ledit polymère du propylène contre toute dégradation dès l'étape de fusion et de diminuer les éventuels phénomènes de corrosion de l'extrudeuse.

Il va de soi que ces différentes variantes peuvent être combinées entre elles.

Les conditions dans lesquelles le procédé selon l'invention est mis en oeuvre sont telles qu'il y a mélange en fondu des différents réactifs. Le procédé selon l'invention est en outre généralement mis en oeuvre dans des conditions telles qu'il y ait réaction au moins partielle des molécules du composé fonctionnel (A) entre elles et/ou avec le polymère du propylène sous l'effet des radicaux libres produits par le générateur. De préférence, ce procédé est mis en oeuvre dans des conditions telles qu'il y ait au moins réaction partielle du composé fonctionnel (A) avec le polymère du propylène de manière à ce qu'une partie des chaînes macromoléculaires du polymère du propylène soient liées entre elles par l'intermédiaire des unités monomériques du composé (A). La température de la masse fondue dépend dès lors de la nature du polymère du propylène et du générateur de radicaux libres. Elle est en général d'au moins 100 °C, le plus souvent d'au moins 130 °C et en particulier d'au moins 140 °C. Généralement on travaille à une température de la masse fondue ne dépassant pas 350 °C, le plus souvent pas 300 °C, et plus particulièrement pas 250 °C.

On obtient de bons résultats avec des températures de 160 à 250 °C.

La durée du procédé dépend des quantités mises en oeuvre des réactifs, de la nature chimique de ces réactifs, de la température, du type d'extrudeuse utilisé, de la vitesse de rotation de sa (ou ses) vis et de son débit. La durée est le plus souvent de 1 seconde à 1 heure, de préférence de 5 secondes à 30 minutes, plus particulièrement de 10 secondes à 10 minutes. Les durées d'au plus 5 minutes suffisent généralement pour produire les polymères du propylène selon le présente invention. Le polymère du propylène mis en oeuvre est de préférence un polymère vierge. Comme cela a déjà été mentionné différents polymères du propylène peuvent être mis en oeuvre dans le procédé selon la présente invention. Toutefois, on ne met généralement en oeuvre à titre de polymère que des polymères du propylène et dans le cas où plusieurs polymères du propylène sont mis en oeuvre on ne met de préférence en oeuvre que les polymères (P) et (Q) définis ci-avant.

Dans ce cas particulier, les quantités respectives des deux polymères sont généralement telles que leur rapport en poids est de 0,05 à 50.

De préférence, ce rapport est d'au moins 1. On obtient de bons résultats lorsque ce rapport est de 1 à 10.

La quantité de composé (A) mis en oeuvre est généralement d'au moins 0,05 g par kg de polymère du propylène mis en oeuvre, de préférence d'au moins 0,1 g et plus particulièrement d'au moins 1 g par kg de polymère du propylène mis en oeuvre. Cette quantité est en outre le plus souvent d'au plus 75 g et généralement d'au plus 40 g par kg de polymère du propylène mis en oeuvre. On obtient des bons résultats lorsque l'on met en oeuvre au plus 25 g de composé (A) par kg de polymère du propylène. Des quantités de composés fonctionnels (A) de 1 à 10 g par kg de polymère du propylène conviennent bien.

Le polymère du propylène et le composé fonctionnel (A) sont mélangés en fondu en présence d'un générateur de radicaux libres. A titre d'exemples de générateur de radicaux libres, on utilise de préférence des peroxydes organiques. Ceux-ci présentent avantageusement une demi-vie d'au moins 1 minute à 170 °C. On peut citer comme exemples typiques le peroxyde de t-butyl cumyl, le α,α'-bis(t-butylperoxy isopropyl)benzène, le 3,5-bis(t-butylperoxy)-3,5-diméthyl 1,2-dioxolane, le peroxyde de di-t-butyl, le 2,5-diméthyl-2,5-di-t-butylperoxyhexane, le p-menthane hydroperoxyde, le pinane hydroperoxyde, le diisopropylbenzène mono-α-hydroperoxyde, l'hydroperoxyde de cumène, le t-butyl hydroperoxyde et leurs mélanges. Les générateurs préférés sont le α,α'-bis(t-butylpercxy isopropyl)benzène et le 2,5-diméthyl-2,5-di-t-butylperoxyhexane.

Le générateur est en général mis en oeuvre en une quantité suffisante pour permettre la réaction des molécules de composé fonctionnel (A) entre elles et/ou avec les chaînes de polymère du propylène. Par ailleurs, il est souhaitable que la quantité ne dépasse pas la quantité nécessaire car tout excès de générateur entraîne une dégradation du polymère du propylène. La quantité est habituellement au moins égale à 0,05 g par kg de polymère du propylène, en particulier au moins égale à 0,1 g par kg, les valeurs d'au moins 0,2 g par kg de polymère du propylène étant les plus avantageuses. En général, la quantité ne dépasse pas 10 g, de préférence pas 5 g et plus particulièrement pas 1 g par kg de polymère du propylène. On obtient de bons résultats lorsque la quantité de générateur de radicaux libres est de 0,1 à 5 g par kg de polymère du propylène, les valeurs d'environ 0,4 g par kg étant les plus recommandées.

L'additif anti-oxydant mis en oeuvre a pour fonction de neutraliser l'excès de radicaux présents dans l'extrudeuse et de conférer de la stabilité thermique au polymère du propylène obtenu. Sa mise en oeuvre selon la présente invention est également essentielle pour conférer aux polymères du propylène simultanément les bonnes propriétés rhéologiques et thermiques décrites ci-avant.

La quantité totale d'additif anti-oxydant dépend en grande partie de la quantité de générateur mise en oeuvre et de l'application visée pour le polymère du propylène. La quantité totale est en général au moins égale à 0,01 g, habituellement au moins égale à 0,1 g de préférence d'au moins 0,5 g par kg de polymère du propylène mis en oeuvre. Cette quantité totale est en outre le plus souvent inférieure ou égale à 100 g, de préférence inférieure ou égale à 50 g et plus particulièrement inférieure ou égale à 10 g par kg de polymère du propylène. On obtient de bons résultats lorsque la quantité d'additif anti-oxydant est de 0,1 à 10 g par kg de polymère du propylène, les quantités d'environ 3 g d'additif anti-oxydant par kg de polymère étant les plus courantes.

Lorsque l'on met en oeuvre un agent préstabilisant tel que décrit ci-avant, cet agent préstabilisant peut être choisi parmi les agents stabilisants conventionnels tels que les agents anti-UV, les agents anti-acides, les agents anti-oxydants et leurs mélanges. Les agents anti-oxydants sont spécialement préférés. La quantité totale d'agent préstabilisant mise en oeuvre dans cette forme de réalisation doit être faible afin de ne pas compromettre les réactions entre les différents réactifs. Elle ne dépasse pas, en général, 1,0 g par kg de polymère du propylène mis en oeuvre, le plus souvent elle est inférieure ou égale à 0,5 g et plus particulièrement inférieure ou égale à 0,1 g par kg de polymère du propylène. La quantité totale d'agent préstabilisant est habituellement au moins égale à 0,005 g par kg de polymère du propylène mis en oeuvre, de préférence d'au moins 0,03 g par kg et plus particulièrement d'au moins 0,05 g par kg de polymère du propylène mis en oeuvre.

Au cours de l'extrusion on peut également incorporer aux polymères du propylène selon la présente invention, à un moment quelconque, d'autres additifs usuels des polymères du propylène tels que à titre d'exemples non limitatifs des agents stabilisants, des agents anti-acides, des agents antistatiques, des colorants organiques ou minéraux, des agents moussants et des matériaux de charge tels que des fibres de verre. Les agents anti-acides sont avantageusement introduits au moins partiellement via la trémie principale.

Ainsi défini le procédé selon la présente invention permet de manière particulièrement simple et reproductible d'obtenir les polymères du propylène décrits ci-avant. En particulier, le procédé selon l'invention présente l'avantage important de ne comporter qu'une seule étape de mélange en fondu ce qui le rend particulièrement économique.

Dans une variante particulière, le procédé selon la présente invention comprend en outre une étape d'épuration du polymère du propylène. Ce traitement supplémentaire a pour fonction d'éliminer tous les composés volatils et en particulier les résidus de composé fonctionnel (A) n'ayant pas réagi. Il permet également, si nécessaire, de récupérer lesdits composés fonctionnels.

Le traitement d'épuration utilisé dans le procédé selon la présente invention consiste en un traitement de granules de polymère du propylène selon la présente invention par un courant gazeux.

A cet effet, le polymère issu de la zone d'évacuation de l'extrudeuse est granulé puis mis en contact avec un courant gazeux pouvant être un courant d'air chaud, un courant gazeux contenant de la vapeur d'eau ou un courant de vapeur d'eau. Le traitement des granules par un courant gazeux contenant de la vapeur d'eau donne de bons résultats. Dans ce cas particulier, le courant gazeux est généralement constitué d'un gaz tel que l'azote ou l'air, l'air étant préféré.

Le traitement des granules par un courant de vapeur d'eau est particulièrement préféré.

Les conditions opératoires (température, durée, pression) dans lesquelles ce traitement d'épuration est effectué peuvent varier dans une large mesure pour autant qu'il y ait diffusion des molécules de composé fonctionnel (A) n'ayant pas réagi vers la surface des granules de polymère et entraînement de ces dernières par le courant gazeux. De préférence on travaille dans des conditions telles que la fusion et/ou la dégradation du polymère du propylène sont évitées.

La température est en général d'au moins 70°C, plus précisément d'au moins 80°C, les valeurs d'au moins 90°C étant les plus courantes. La température est en outre habituellement inférieure ou égale à 200 °C, le plus souvent inférieure ou égale à 160°C, les valeurs d'au plus 120°C étant les plus utilisées. On obtient de bons résultats lorsque la température est d'environ 100°C.

La durée du traitement d'épuration est conditionnée entre autre par la teneur résiduelle de composé (A), par la cinétique de la diffusion desdits composés dans les granules, par les échanges thermiques des dispositifs utilisés et par les applications souhaitées pour le polymère du propylène. La durée de ce traitement est généralement d'au moins environ 30 minutes, plus particulièrement d'au moins environ 2 heures, les durées d'au moins environ 10 heures étant les plus courantes. Cette durée ne dépasse toutefois généralement pas environ 140 heures et le plus souvent pas environ 120 heures, des durées d'au maximum 100 heures étant préférées.

Lorsque le traitement d'épuration est effectué par mise en contact des granules de polymère du propylène avec un courant gazeux contenant, ou constitué de, la vapeur d'eau, la quantité totale de vapeur d'eau est généralement d'au moins 0,05 kg, de préférence d'au moins 0,2 kg et plus particulièrement d'au moins 0,5 kg par kg de granules de polymère du propylène. En général cette quantité est inférieure ou égale à 20 kg, le plus souvent inférieure ou égale à 10 kg et plus particulièrement inférieure ou égale à 5 kg de vapeur d'eau par kg de granules de polymère.

Selon l'invention, le traitement d'épuration des polymères du propylène peut être effectué en continu ou en discontinu. Le dispositif utilisé pour ce traitement d'épuration peut être tout récipient dans lequel on introduit les granules de polymère du propylène et dans lequel on effectue un balayage gazeux. De préférence le courant gazeux est introduit à l'extrémité inférieure du récipient.

Ce dispositif contient en outre avantageusement un dispositif conventionnel destiné à l'épuration des effluents et éventuellement à la récupération et au recyclage du composé fonctionnel (A). Lorsque le traitement d'épuration a été effectué en mettant en oeuvre de la vapeur d'eau, les granules de polymère du propylène sont ensuite préférentiellement séchées par tout moyen connu à cet effet.

Les polymères du propylène ainsi obtenus ne contiennent qu'une très faible quantité de composé fonctionnel (A) libre. Selon la présente invention on entend par quantité de composé fonctionnel (A) libre, appelée ci-après plus simplement (QA), la quantité de composé (A) dosée dans le test décrit ci-après en rapport avec les exemples illustrant l'invention. On obtient ainsi des polymères dont le (QA) est inférieur à 100 mg par kg et de préférence inférieur à 20 mg par kg de polymère du propylène. Les polymères selon la présente invention qui ont subi le traitement d'épuration sont avantageusement tels que leur (QA) est inférieure ou égale à 1 mg, de préférence inférieure ou égale à 0,5 mg et plus particulièrement inférieure ou égale à 0,1 mg par kg de polymère du propylène. Les polymères du propylène ainsi définis peuvent être utilisés dans les applications alimentaires ainsi que dans toute autre application dans laquelle une grande pureté est requise. Ils présentent en outre l'avantage de ne pas dégager de composés volatils lors de leur mise en oeuvre ultérieure. De ce fait on ne rencontre pas de problèmes d'odeur et/ou de sécurité liés à la présence des composés volatils et les objets obtenus lors desdites mises en oeuvre ne contiennent pas de bulles générées par lesdits composés. Ces polymères particuliers constituent dès lors un objet particulier de la présente invention.

Les exemples suivants servent à illustrer l'invention. Les exemples 2R et 3R sont donnés à titre de comparaison. La signification des symboles utilisés dans ces exemples, les unités exprimant les grandeurs mentionnées et les méthodes de mesure de ces grandeurs sont explicitées ci-dessous.
- PI:: période d'induction de l'oxydation du polymère du propylène à 180°C exprimée en minutes. La période d'induction est mesurée par analyse thermique différentielle au cours de laquelle on soumet le polymère du propylène à une oxydation sous oxygène à une température constante de 180°C et on mesure le temps s'écoulant jusqu'à l'apparition d'un phénomène exothermique provoqué par l'oxydation du polymère du propylène. La période d'induction est une mesure de la stabilité thermique.
- QA:: quantité de composé fonctionnel (A) libre exprimée en mg par kg de polymère du propylène. Cette valeur est obtenue en broyant 50 g de granules dans de l'azote liquide à l'aide d'un broyeur à boulets, en soumettant pendant 16 heures, 40 g de matière broyée à un traitement d'extraction à l'acétone dans un extracteur SOXHLET et en dosant après concentration par évaporation, la quantité de composé (A) présente dans l'acétone par chromatographie liquide haute pression.

Les exemples 1 à 4 et 7 ont été réalisés au moyen d'une extrudeuse double-vis co-rotative de type WERNER & PFLEIDERER ZSK 25 aménagée de manière à ce qu'elle comprenne les parties suivantes:
(a) une trémie d'alimentation principale à l'entrée de l'extrudeuse, destinée à introduire le polymère du propylène et optionnellement des additifs de ce dernier;
(b) un dispositif d'alimentation différée destiné à introduire le composé fonctionnel (A) et le générateur de radicaux libres;
(c) deux premiers éléments de vis correspondant aux alimentations (a) et (b) refroidis à l'eau;
(d) une zone chauffée à 180°C pour permettre la fusion du polymère et la réaction en fondu;
(e) un dispositif d'alimentation différée disposé à un endroit situé après l'introduction du composé fonctionnel (A) et du générateur de radicaux libres et où la masse comprenant le polymère, le composé (A) et le générateur est déjà fondue. Ce second dispositif est destiné à introduire les anti-oxydants et, optionnellement, un polymère du propylène identique à, ou différent de celui introduit en (a);
(f) une zone de compression suivie d'une zone d'évacuation, la première ayant pour fonction de compresser la matière à extruder au travers de la seconde.

La vitesse de rotation des vis de l'extrudeuse était 150 tr/min.

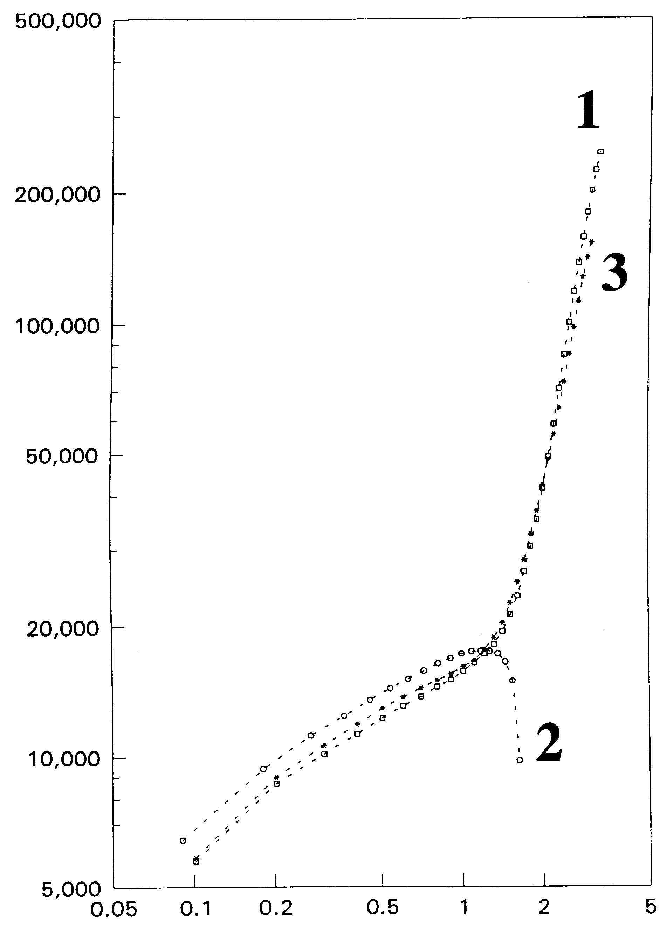

Les exemples 5 et 6R ont été réalisés avec une extrudeuse ZSK 40 aménagée de la même manière que l'extrudeuse ZSK 25 ci-avant. La vitesse de rotation des vis de cette extrudeuse est de 300 tr/min. La viscosité élongationnelle des polymères du propylène est déterminée au moyen d'un rhéomètre commercialisé par RHEOMETRICS sous la dénomination RHEOMETRICS EXTENTIONAL RHEOMETER RER-9000. Les courbes reprises dans la figure unique ci-annexée (appelées ci-après diagrammes RER) reprennent la variation, à 190°C, de la viscosité élongationnelle à l'état fondu (exprimée en Pa.s) en fonction du temps (exprimé en s) pour un gradient d'élongation (exprimée en s⁻¹) de 1. Les courbes 1, 2 et 3 correspondent respectivement aux exemples 1, 2R et 3R.

### Exemple 1

On alimente l'extrudeuse, via la trémie (a), à un débit de 8 kg/h, avec un polymère du propylène commercialisé sous la dénomination ELTEX® P HL 001 P par SOLVAY (SA). On introduit, via le dispositif (b) sous courant d'azote et à un débit de 40 g/h un mélange contenant, pour 1000 parties en poids, 925 parties d'un mélange 55 % en poids de divinylbenzène et 45 % en poids d'éthylvinylbenzène (ce mélange, appelé ci-après plus simplement DVB, est préalablement purifié sur alumine) et 75 parties de 2,5-diméthyl-2,5-di-t-butylperoxyhexane (DHBP).

On introduit, via le second dispositif d'alimentation (e), à un débit de 2 kg/h, un polymère du propylène commercialisé sous la dénomination ELTEX P HY 001 P par SOLVAY contenant par kg, 4,5 g de pentaérythrityl tétrakis (3,5-di-t-butyl-4-hydroxyphényl propionate) (AO1), 5,0 g de tris(2,4-di-t-butylphényl) phosphite (AO2) et 6 g de stéarate de calcium (StCa).

Le produit sortant de l'extrudeuse présente les caractéristiques suivantes :
- MFI : 1,6
- PI : 69 min
- Température de cristallisation : 129°C

Le diagramme RER de ce polymère montre qu'il présente le phénomène de durcissement structural sous contrainte.

### Exemple 2R

On reproduit l'exemple 1, sauf que l'on ajoute au polymère du propylène introduit via la trémie (a), par kg, 1,5 g de StCa, 1,13 g de AO1 et 1,25 g de AO2 et que l'on introduit, via le dispositif (e), le polymère ELTEX HY 001 P en l'absence d'AO1, d'AO2 et de StCa.

Le produit sortant de l'extrudeuse présente les caractéristiques suivantes :
- MFI : 3,4
- PI: 23 min
- Température de cristallisation : 123 °C

Le diagramme RER montre l'absence de durcissement structural sous contrainte. On constate donc, à la fois, une diminution des propriétés rhéologiques et de la stabilité thermique.

### Exemple 3R

On reproduit en tout point l'exemple 1, sauf que l'on introduit que le polymère introduit via le dispositif (e) est exempt d'additif.

Le produit sortant de l'extrudeuse présente les caractéristiques suivantes :
- MFI : 2,9
- PI : 0 min
- Température de cristallisation : 128°C

Le diagramme RER montre un durcissement structural sous contrainte inférieur à celui de l'exemple 1 et la stabilité thermique du polymère est nulle.

### Exemple 4

On procède comme décrit à l'exemple 1 sauf que la trémie (a) est alimentée avec du polymère ELTEX P HL 001 P contenant 1,5 g/kg de StCa et que le DVB introduit via le dispositif (b) contient 62 % en poids de divinylbenzène et 38 % en poids d'éthylvinylbenzène.

Une granulatrice disposée à la sortie de l'extrudeuse délivre un produit dont le (QA) est d'environ 2 g par kg.

On introduit ces granules en continu dans un silo traversé de bas en haut par un courant de vapeur d'eau. Le débit de vapeur est réglé de manière à assurer une température homogène de 100 °C dans tout le silo et la quantité de vapeur d'eau mise en oeuvre est d'environ 1 kg par kg de granules. Le temps de séjour des granules dans le silo est d'environ 85 heures.

Le mélange de vapeur d'eau et d'effluent organique issu du silo est alors condensé et les phases aqueuses et organiques sont récupérées et traitées. Les granules de polymères sont transférées par gravité dans un deuxième silo pour y être séchées, pendant environ 6 heures, par un courant d'air à 60 °C. Le polymère du propylène ainsi obtenu a un (QA) inférieur à 1 mg/kg.

### Exemple 5

Cet exemple illustre un polymère du propylène selon l'invention constitué de deux polymères de MFI différents.
On procède comme à l'exemple 1 sauf que :
* on introduit à un débit de 80 kg/h, via la trémie (a) un mélange constitué de 59 % en poids de polymère ELTEX P HL 001 P (MFI 1,8 g/10 min - polymère (P)) et 41 % en poids de polymère ELTEX P HY 001 P (MFI: 45 g/10 min - polymère (Q)),
* l'introduction du DVB et du DHBP via le dispositif (b) se fait à un débit de 0,4 kg/h, et
* l'introduction via le dispositif (e) se fait à un débit de 8 kg/h.

Le polymère obtenu présente du durcissement structural sous contrainte, un MFI de 4 g/10 min et un module d'élasticité en flexion (Flex Mod) mesuré à 23 °C selon la norme ISO 178 (éprouvette injectée d'une épaisseur de 4 mm) de 2240 MPa.

### Exemple 6R

On procède comme à l'exemple 5 sauf que l'on omet d'introduire le DVB et le DHBP.

On obtient ainsi un polymère ne présentant pas de durcissement structural sous contrainte dont le MFI est de 7,4 g/10 min et dont le Flex Mod est de 1590 MPa.

### Exemple 7

On procède en tous points comme à l'exemple 1 sauf que l'on introduit via le dispositif (e), à un débit de 1 kg/h du polymère ELTEX P HL 001 P contenant, par kg, 20 g de (AO1), 20 g de (AO2) et 10 g de (StCa) et que le débit d'introduction du polymère via la trémie (a) est de 9 kg/h.

On obtient ainsi un polymère présentant du durcissement structural sous contrainte dont le MFI est de 1 et dont le PI est supérieur à 60 min.

## Revendications

1. Homo- ou co-polymère du propylène contenant des unités monomériques dérivées d'au moins un composé fonctionnel (A) comprenant au moins deux insaturations vinyliques et un ou plusieurs noyaux aromatiques présentant un durcissement structural sous contrainte.

2. Polymère du propylène selon la revendication 1, dans lequel le polymère du propylène est choisi parmi les homopolymères du propylène et les copolymères de ce dernier contenant au moins 50 % en poids de propylène et au moins un autre monomère choisi parmi les α-oléfines contenant de 2 à 20 atomes de carbone.

3. Polymère du propylène selon la revendication 2, dans lequel le polymère du propylène contient deux polymères du propylène, polymères (P) et (Q), dont l'indice de fluidité en fondu (MFI) est différent.

4. Polymère du propylène selon la revendication 3, dans lequel le polymère (P) est un polymère du propylène dont le MFI est de 0,5 à 5 g/10 min et le polymère (Q) est un homopolymère du propylène dont le MFI est de 40 à 100 g/10 min.

5. Polymère du propylène selon l'une quelconque des revendications 1 à 4, dans lequel le composé fonctionnel (A) est le divinylbenzène.

6. Polymère du propylène selon l'une quelconque des revendications 1 à 5, dans lequel la teneur en unités monomériques dérivées du composé fonctionnel (A) est d'au moins 0,01 g par kg de polymère.

7. Polymère du propylène selon l'une quelconque des revendications 1 à 6 contenant un additif anti-oxydant.

8. Polymère du propylène selon la revendication 7, dans lequel la quantité d'additif anti-oxydant est de 0,5 à 10 g par kg de polymère.

9. Procédé continu de préparation d'un polymère du propylène contenant des unités monomériques dérivées d'au moins un composé fonctionnel (A) comprenant au moins deux insaturations vinyliques et un ou plusieurs noyaux aromatiques présentant un durcissement structural sous contrainte par mélange en fondu d'un polymère du propylène, d'au moins un composé fonctionnel (A) et d'un générateur de radicaux libres dans une extrudeuse comprenant à sa sortie une zone de compression précédant une zone d'évacuation, dans lequel on introduit au moins un additif anti-oxydant dans la masse fondue au plus tard avant l'entrée de celle-ci dans ladite zone de compression.

10. Procédé selon la revendication 9, dans lequel on met en oeuvre un polymère contenant deux polymères du propylène, polymères (P) et (Q), dont l'indice de fluidité en fondu est différent.

11. Procédé selon l'une quelconque des revendications 9 et 10, dans lequel la quantité de composé (A) mis en oeuvre est de 1 à 10 g par kg de polymère du propylène.

12. Procédé selon les revendications 9 à 11, dans lequel la quantité de générateur de radicaux libres mis en oeuvre est de 0,1 à 5 g par kg de polymère du propylène.

13. Procédé selon l'une quelconque des revendications 9 à 12, comprenant une étape d'épuration du polymère du propylène.

14. Procédé selon la revendication 13, dans lequel le polymère issu de la zone d'évacuation de l'extrudeuse est granulé puis mis en contact avec un courant gazeux pouvant être un courant d'air chaud, un courant gazeux contenant de la vapeur d'eau ou un courant de vapeur d'eau.

15. Polymère du propylène selon l'une quelconque des revendications 1 à 8, dans lequel la quantité de composé fonctionnel (A) libre (QA) est inférieure ou égale à 1 mg par kg de polymère du propylène.

16. Utilisation d'un polymère selon l'une quelconque des revendications 1 à 8 et 15, pour l'obtention d'objets façonnés par extrusion-ou injection-soufflage, thermoformage ou enduction.

17. Utilisation d'un polymère selon l'une quelconque des revendications 1 à 8 et 15, pour la fabrication de mousses.
